Europäisches Patentamt

(19) European Patent Office

Office européen des brevets

(11) Publication number: **0 269 028 B1**

(12) EUROPEAN PATENT SPECIFICATION

(45) Date of publication of patent specification: **25.03.92**

(21) Application number: **87117171.6**

(22) Date of filing: **20.11.87**

(51) Int. Cl.5: **C08L 27/18**, C08K 13/02, F16C 33/20, //(C08L27/18, 63:00),(C08K13/02,3:00,5:01, 5:02)

(54) **Composition based on polytetrafluoroethylene not containing water, suitable for obtaining a self-lubricating layer on porous bronze bearings.**

(30) Priority: **21.11.86 IT 2241986**

(43) Date of publication of application:
**01.06.88 Bulletin 88/22**

(45) Publication of the grant of the patent:
**25.03.92 Bulletin 92/13**

(84) Designated Contracting States:
**BE DE FR GB NL**

(56) References cited:
**GB-A- 2 144 761**

(73) Proprietor: **AUSIMONT S.p.A.**
**Foro Buonaparte, 31**
**I-20121 Milano(IT)**

(72) Inventor: **Marcora, Giovanni, Dr.**
**24, piazza Italia**
**I-20020 Magnago Milano(IT)**
Inventor: **Cataldo, Federico**
**9, via Dante**
**I-20020 Cagliate Milano(IT)**

(74) Representative: **Barz, Peter, Dr. et al**
**Patentanwälte Dr. V. Schmied-Kowarzik**
**Dipl.-Ing. G. Dannenberg Dr. P. Weinhold Dr.**
**D. Gudel Dipl.-Ing. S. Schubert Dr. P. Barz**
**Siegfriedstrasse 8**
**W-8000 München 40(DE)**

Rank Xerox (UK) Business Services

## Description

An object of the present invention is to provide a PTFE-based composition, in the form of a paste, suitable for obtaining a thin self-lubricating layer on a porous bronze bearing. The composite material thus obtained is used in the production of sliding-friction main bearings working in the absence of lubricating greases or oils. By this method there may be obtained bushings, flanged sleeves, thrust bearings, sliding strips and slippage surfaces in general, particularly used in applications where the maintenance is difficult and where any presence of lubricants is not provided. Moreover they may work in corrosive surroundings, within a wide temperature range from -200 to 260° C and they are of small size.

There are known composite materials useful for the manufacture of supporting sliding friction bearings, working under dry conditions and consisting of:
- a metal support, preferably of steel;
- a thin porous bronze layer firmly fixed to the metal support, preferably obtained by a sintering process;
- a self-lubricating layer, coating the porous bronze and firmly anchored to the same, having a low friction coefficient and consisting of a resin with a binding function, said resin being filled with suitable materials.

US-A-4 394 275 discloses composite materials of the above described type, in which the resinous coating layer consists of polyvinylidenefluoride filled with lead metal in a powdery form and optionally with a minor quantity (max. 30 % by weight) of PTFE.

Coatings of this kind are suitable only when the working temperature of the manufactured article is maintained within rather low values. In fact, at the melting temperature of polyvinylidenefluoride, there would occur a drastic reduction of the wear resistance.

EP-A-163 937 describes a process using a PTFE paste which comprises an aqueous dispersion of the polymer and suitable mineral charges. The presence of water requires a very complex application process for the paste by the use of auxiliary filtering paper sheets, a polyester fabric for the partial elimination of the water before the sintering.

The PTFE-based composition according to this invention is suitable for supplying a coating layer displaying excellent self-lubricating properties as well as an excellent resistance to the high working temperatures, to which the manufactured article may be exposed. Said composition is prepared in the form of a paste suitable for being applied by means of automatic mechanical systems, such as spreading rollers and the like, onto the sintered bronze layer, and subsequently subjected to a thermal heat treatment under conventional temperature conditions, in order to sinter the PTFE.

The composition according to this invention does not contain water but comprises the following essential components:

a) polytetrafluoroethylene in the form of a dry powder comprising particles with a granulometric size range of from 1 to 8 $\mu$m, preferably below 4 $\mu$m, said granulometry being also achievable by size reduction of the granules of the PTFE starting material during the processing of the mixture in a roller mill.

The PTFE must have a molecular weight of from 300 000 to 500 000 and a melt flow index of from 0.1 to 0.3, measured at 380° C according to ASTM 1238 with P = 22 kg, a nozzle with an inside diameter of 1 mm and a height of 8 mm. The amount of PTFE in the end composition is 30 - 60 % by weight.

PTFE as used in the present invention is preferably obtained by a dispersion or emulsion process or by cocoagulation;

b) mineral charges with good self-lubricating properties selected from $MoS_2$, graphite, PbO, Pb metal powder, aluminum silicate. The granulometry of the filler substances is preferably comprised within the range of from 4 to 5 $\mu$m.

The total amount of charges or fillers in the end composition is 10 to 25 % by weight. The charges must also confer good thermal conductivity to the coating composition obtained in order to transfer the heat of friction developed during the operation, to the support. For this purpose it is preferred that the graphite be present in a quantity of from 1 to 5 % by weight;

c) a resin with the function of ensuring a high adhesion of the coating layer covering the porous bronze substrate, combined with good flexibility, particularly in view of a possible mechanical bending of the bonded (laminated) composite material during the production of manufactured articles. The resin must, moreover, resist to the high temperature requried for the thermal heat treatment during the sintering of the PTFE.

Resins suitable for that purpose are for example, epoxy , silicone, and polyamide resins. The quantity of resin should be kept within the necessary limits, in general from 2 to 8 %, preferably 3 to 5 % by weight,

2

based on the total weight of the composition. The resin is, introduced into the formulation suitably diluted or dissolved in a volatile solvent, preferably having a boiling point of from 75 to 120°C, in order to be easily evaporated before the thermal sintering treatment;

d) a liquid having a good wetting power with regard to PTFE and also to the charges or fillers selected from chlorinated hydrocarbon solvents, sufficiently volatile (boiling point from 50 to 150°C). Preferred liquids for this purpose are perchloroethylene and methylene chloride. The quantity of liquid generally is from 10 to 20 % by weight, and is determined depending on the desired viscosity of the paste;

e) a paraffinic hydrocarbon having a viscosity of from 10 to 20 centistokes ($10 \cdot 10^{-6}$ to $20 \cdot 10^{-6}$ m$^2$/s) at 40°C. The quantity of this substance is adjusted with reference to the viscosity desired for the final paste, and in general is from 10 to 50 %.

The mixing of the above indicated ingredients is carried out by means of conventional equipment. One starts with mixing the powdery materials (PTFE and the mineral charges or fillers), whereafter there is admixed resin c), dissolved in a solvent, the wetting liquid d) and the paraffinic hydrocarbon e). The thorough mixing of the components may be preferably carried out in a roller mill. The paste is then applied, by means of a mechanical spreading system, for instance by means of a roller spreading device, on the porous bronze substrate supported by the metal sheet (in general made of steel). Subsequently a preliminary thermal treatment is carried out in order to eliminate the volatile components, followed by a thermal treatment at high temperatures in order to achieve the sintering of the PTFE according to conventional procedures.

In this way, there is obtained a covering layer based on filled PTFE, perfectly anchored to the porous bronze layer, and having an excellent wear resistance, excellent self-lubricating properties, capable of resisting to high operational temperatures of the sliding-friction type support. The PTFE-based covering layer, in general, has a thickness of from 25 to 30 $\mu$m.

The composite material thus obtained may subsequently be machined and then subjected to bending, molding, cutting, in order to obtain finished manufactured articles such as bushings, slideways and guide shoes.

It has been found that the flexibility and mechanical resistance of the PTFE-based layer is better when it is applied in more layers, i.e., a first layer of 3 to 5 $\mu$m, the subsequent layers with a thickness of 10 to 15 $\mu$m, up to the final thickness.

In the following there is described, for purely illustrative purposes, the preparation of the paste according to this invention, and its application onto the metal substrate of steel/porous bronze.

EXAMPLE

Having the following components, the following composition has been prepared:

| | |
|---|---|
| PTFE type L 206 | 40.2 parts by weight |
| MoS$_2$ | 1.7 " " " |
| PbO | 11.0 " " " |
| Graphite EK/83 | 1.7 " " " |
| Epoxy resin (Araldite GT/7071) | 3.4 " " " |
| Methylethylketone | 8.0 " " " |
| Perchloroethylene | 11.0 " " " |
| Vaseline | 23.0 " " " |
| | 100.0 parts by weight |

The powdery products, i.e. the first four components, were mixed together in dry state. Subsequently first the epoxy resin was admixed, dissolved in methylethylketone and then the perchloroethylene, while continuing the mixing until the added perchloroethylene had wetted all the components. At last there was added the vaseline, thereby obtaining a paste with the desired consistency.

The thus obtained paste was then passed through a tricylindrical refiner for grinding and homogenization, this operation being repeated at least two times.

Thereby was obtained a paste ready for use, with spreading characteristics suitable for coating the porous support. The viscosity of the thus obtained paste amounted to 110 mPa•s, it may, however, be adjusted by adding vaseline oil with reference to the technique adopted for the application to the substrate.

By spreading, there was first applied a layer of about 3 to 5 μm thickness, and then there were applied successive layers of 10 to 15 μm thickness each, until a total thickness of 25 to 30 μm is reached.

In this way flaws in the sintering process, due to the critical thickness of the coating are avoided.

The sintering on a laboratory scale (30 × 70 mm laminations) was carried out at 400°C for 7 minutes, in a static oven. The test pieces were subjected to wear-tests and to a determination of the friction coefficient. There were found excellent values.

**Claims**

1. A PTFE-based composition not containing water which comprises the following components in parts by weight per 100 parts of the mixture:

   a) PTFE in the form of a dry powder,having a granulometric distribution of from 1 μm to 8 μm, a molecular weight of from 300 000 to 500 000 and a melt flow index of from 0.1 to 0.3, measured at 350°C according to ASTM 1238, in an amount of from 30 to 60 parts by weight;

   b) mineral charges selected from $MoS_2$, PbO, Pb powdery metal, graphite, aluminum silicates with a granulometry of from 4 to 5 μm, in a total amount of from 10 to 25 parts by weight;

   c) a resin having adhesive properties selected from epoxy, silicone, polyamide resins, in an amount of from 2 to 8 parts by weight, dissolved in a volatile solvent;

   d) a liquid having good wetting power with respect to the PTFE and the charges, selected from chlorinated hydrocarbon solvents having a boiling point of from 50 to 150°C, in an amount of from 10 to 20 parts by weight;

   e) predominantly aliphatic paraffinic hydrocarbons having a viscosity of from 10 to 20 centistokes (from $10•10^{-6}$ to $20•10^{-6}$ m$^2$/s) at 40°C in an amount of from 10 to 50 parts by weight.

2. A composition according to claim 1, characterized in that the resin having adhesive properties contains graphite in a quantity of from 1 to 5 parts by weight.

3. A composition according to claim 1 or 2, characterized in that the resin having adhesive properties is an epoxy resin used in an amount of from 3 to 5 parts by weight.

4. A composition according to any one of claims 1 to 3, characterized in that the liquid with wetting properties is selected from perchloroethylene and methylene chloride.

5. A composition according to any one of claims 1 to 4, characterized in that the paraffinic hydrocarbon is vaseline having a viscosity of 15 centistokes ($15•10^{-6}$ m$^2$/s) at 40°C.

6. The use of a composition according to any one of claims 1 to 5 for forming a covering layer with self-lubricating properties on a porous bronze substrate by thermal sintering.

**Revendications**

1. Une composition à base de PTFE ne contenant pas d'eau, qui comprend les composants suivants,en parties en poids pour 100 parties du mélange:

   a) un polytétrafluoroéthylène sous la forme d'une poudre sèche, ayant une distribution granulométrique de 1 à 8 μm, un poids moléculaire de 300.000 à 500.000 et un indice de fluidité de 0,1 à 0,3 tel que mesuré à 350°C selon la norme ASTM 1238, en une quantité de 30 à 60 parties en poids;

   b) des charges minérales choisies parmi $MoS_2$, graphite, PbO, poudre de Pb métallique, silicates d'aluminium, ayant une granulométrie de 4 à 5 μm, en une quantité totale de 10 à 25 parties en poids;

   c) une résine ayant des propriétés adhésives choisies parmi les résines époxy, silicone et polyamide, en une quantité de 2 à 8 parties en poids, dissoute dans un solvant volatil;

   d) un liquide ayant un bon pouvoir mouillant en ce qui concerne le PTFE et les charges, choisi parmi des solvants hydrocarbonés chlorés ayant un point d'ébullition de 50 à 150°C, en une quantité de 10 à 20 parties en poids;

   e) des hydrocarbures paraffiniques principalement aliphatiques ayant une viscosité de l'ordre de 10 à 20 centistockes à 40°C ($10.10^{-6}$ à $20.10^{-6}$ m$^2$/s ), en une quantité de 10 à 50 parties en poids.

**2.** Une composition suivant la revendication 1, caractérisée en ce que la résine ayant des propriétés adhésives contient du graphite en une quantité de 1 à 5 parties en poids.

**3.** Une composition suivant la revendication 1 ou la revendication 2, caractérisée en ce que la résine ayant des propriétés adhésives est une résine époxy utilisée en une quantité de 3 à 5 parties en poids.

**4.** Une composition suivant l'une quelconque des revendications 1 à 3, caractérisée en ce que le liquide doté de propriétés mouillantes est choisi parmi le perchloroéthylène et le chlorure de méthylène.

**5.** Une composition suivant l'une quelconque des revendications 1 à 4, caractérisée en ce que l'hydrocarbure paraffinique est une vaseline ayant viscosité de 15 centistokes ($15.10^{-6}$ m$^2$/s) à 40°C.

**6.** L'utilisation d'une composition suivant l'une quelconque des revendications 1 à 5, pour la formation d'une couche de recouvrement dotée de propriétés auto-lubrifiantes sur un substrat de bronze poreux par frittage thermique.

**Patentansprüche**

**1.** Zusammensetzung auf PTFE-Basis, die kein Wasser enthält, umfassend die folgenden Komponenten in Gewichtsteilen pro 100 Teile der Mischung:

a) PTFE in Form eines trockenen Pulvers mit einer Korngrößenverteilung von 1 um bis 8 um, einem Molekulargewicht von 300 000 bis 500 000 und einem Schmelzflußindex von 0,1 bis 0,3, gemessen bei 350°C nach ASTM 1238, in einer Menge von 30 bis 60 Gewichtsteilen;

b) Mineralzuschläge mit Korngrößen von 4 bis 5 $\mu$m, die aus MoS$_2$, PbO, pulverförmigem Pb-Metall, Graphit und Aluminiumsilikaten ausgewählt sind, in einer Gesamtmenge von 10 bis 25 Gewichtsteilen;

c) ein Harz mit Haftvermögen, das aus Epoxy-, Silikon- und Polyamidharzen ausgewählt ist, in einer Menge von 2 bis 8 Gewichtsteilen, gelöst in einem flüchtigen Lösungsmittel;

d) eine Flüssigkeit mit gutem Benetzungsvermögen hinsichtlich PTFE und der Zuschläge, das aus chlorierten Kohlenwasserstoff-Lösungmitteln mit einem Siedepunkt von 50 bis 150°C ausgewählt ist, in einer Menge von 10 bis 20 Gewichtsteilen;

e) vorwiegend aliphatische Paraffin-Kohlenwasserstoffe mit einer Viskosität von 10 bis 20 Centistokes ($10 \times 10^{-6}$ bis $20 \times 10^{-6}$ m$^2$/s) bei 40°C in einer Menge von 10 bis 50 Gewichtsteilen.

**2.** Zusammensetzung nach Anspruch 1, dadurch gekennzeichnet, daß das Harz mit Haftvermögen Graphit in einer Menge von 1 bis 5 Gewichtsteilen enthält.

**3.** Zusammensetzung nach Anspruch 1 oder 2, dadurch gekennzeichnet, daß das Harz mit Haftvermögen ein Epoxyharz ist, das in einer Menge von 3 bis 5 Gewichtsteilen eingesetzt wird.

**4.** Zusammensetzung nach irgendeinem der Ansprüche 1 bis 3, dadurch gekennzeichnet, daß die benetzende Flüssigkeit aus Perchlorethylen und Methylenchlorid ausgewählt ist.

**5.** Zusammensetzung nach irgendeinem der Ansprüche 1 bis 4, dadurch gekennzeichnet, daß der Paraffin-Kohlenwasserstoff Vaseline mit einer Viskosität von 15 Centistokes ($15 \times 10^{-6}$ m$^2$/s) bei 40°C ist.

**6.** Verwendung einer Zusammensetzung nach irgendeinem der Ansprüche 1 bis 5 zur Bildung einer Überzugsschicht mit selbstschmierenden Eigenschaften auf einem porösen Bronzesubstrat durch thermisches Sintern.